# EUROPÄISCHE PATENTSCHRIFT

(11) **EP 0 887 580 B1**
(45) Veröffentlichungstag und Bekanntmachung des Hinweises auf die Patenterteilung: **02.01.2003**
(21) Anmeldenummer: 98105147.7
(22) Anmeldetag: 21.03.1998
(51) Int. Cl.: F16K 17/10

(54) **Hydraulisch vorsteuerbares Druckventil**
Hydraulically pilot-controlled pressure valve
Vanne de pression à commande pilotée hydrauliquement

(30) Priorität: 25.06.1997 DE 19727003
(43) Veröffentlichungstag der Anmeldung: 30.12.1998
(73) Patentinhaber: ROBERT BOSCH GMBH, 70442 Stuttgart (DE)
(72) Erfinder: Pfuhl, Berthold, 71706 Markgroeningen (DE); Blumendeller, Wilhelm, 71691 Freiberg (DE)

(56) Entgegenhaltungen:
- DE-A- 2 047 795
- DE-A- 2 245 706
- DE-A- 3 401 369
- DE-A- 3 808 962
- DE-A- 3 824 089
- DE-A- 19 501 683
- GB-A- 2 202 612

## Beschreibung

### Stand der Technik

Die Erfindung geht aus von einem hydraulisch vorsteuerbaren Druckventil nach der im Oberbegriff des Anspruchs 1 näher angegebenen Gattung.

Es sind schon hydraulisch vorsteuerbare Druckventile bekannt, die ein als Einbauventil bzw. als Ventilpatrone ausgebildetes Hauptventil und ein dieses vorsteuernde Vorsteuerventil aufweisen, wobei das Vorsteuerventil in handverstellbarer Bauweise (DE 20 47 795 A1) bzw. in elektromagnetisch verstellbarer Bauweise (DE 38 24 089 A1) ausgeführt ist. Bei solchen Druckventilen mit größeren Hauptventilkolben, die sehr häufig als Sitzventile ausgebildet sind, und die eine Vorsteuerung durch ein Proportional-Druckventil haben, ergibt sich das Problem, daß die Stellzeiten für den Druckaufbau relativ lang werden. Dies resultiert daraus, daß einerseits der Steuerölstrom für das Vorsteuerventil aus Stabilitätsgründen sowie aus energetischen Gründen begrenzt ist, andererseits jedoch ein großer Volumenstrom aufgrund eines großen Hauptventilkolbens zur schnellen Verstellung des Ventilkörpers benötigt wird. Dabei ist zu berücksichtigen, daß die meist becherförmig ausgebildeten Hauptventilkolben auf ihrer Vorder- und Rückseite jeweils gleich große Druckflächen aufweisen und sich somit ein relativ großvolumiger Steuerraum ergibt. Die Forderungen nach kurzer Stellzeit und Stabilität der Steuerung lassen sich daher gerade bei großen Ventilkegeldurchmessern kaum erfüllen.

### Vorteile der Erfindung

Das erfindungsgemäße hydraulisch vorsteuerbare Druckventil mit den kennzeichnenden Merkmalen des Hauptanspruchs hat demgegenüber den Vorteil, daß es eine deutliche Reduzierung der Stellzeit des Druckventils ermöglicht, vor allem wenn ein Druckaufbau ausgehend von kleinen Drücken erfolgt. Zudem sind die Möglichkeiten für die Dämpfung des Hauptventilkolbens wesentlich verbessert, wodurch sich ein stabilisierendes Verhalten auf die Drucksteuerung ergibt. Weiterhin ermöglicht das vorsteuerbare Druckventil eine besonders einfache, kompakte und kostengünstige Bauweise.

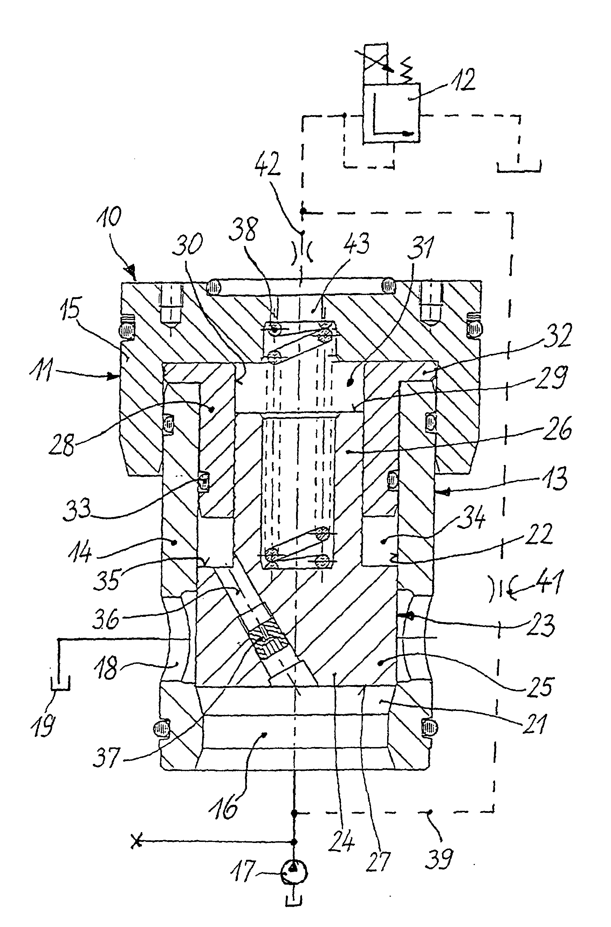

Durch die in den Unteransprüchen aufgeführten Maßnahmen sind vorteilhafte Weiterbildungen und Verbesserungen des im Hauptanspruch angegebenen Druckventils möglich. Besonders vorteilhaft für eine wirksame Funktion ist eine Bauweise nach den Ansprüchen 2 und 3, wenn das Hauptventil in Sitzventilbauweise ausgeführt wird. Eine besonders zweckmäßige und einfache Bauweise ergibt sich gemäß Anspruch 4, wodurch die einzelnen Bauelemente leicht herstellbar sind und bisherige Teile weiterverwendet werden können. Ferner begünstigen die Ausführungen nach den Ansprüchen 5 und 6 eine einfache und platzsparende Bauweise, wobei die strömungstechnischen Verhältnisse im Hauptventil besonders günstig berücksichtigt werden. Bei einer Ausführung nach Anspruch 7 kann in vorteilhafter Weise eine Eigenversorgung für das Steueröl vorgesehen werden. Eine besonders vorteilhafte, einfache und kostengünstige Bauweise ergibt sich gemäß Anspruch 9, wenn der Hauptventilkolben einstückig ausgeführt wird. Weitere vorteilhafte Ausgestaltungen ergeben sich aus den übrigen Ansprüchen, der Beschreibung sowie der Zeichnung.

### Zeichnung

Ein Ausführungsbeispiel der Erfindung ist in der Zeichnung dargestellt und in der nachfolgenden Beschreibung näher erläutert. Es zeigen die einzige Figur einen Längsschnitt durch ein Ausführungsbeispiel des hydraulisch vorsteuerbaren Druckventils in vereinfachter Darstellung.

### Beschreibung des Ausführungsbeispiels

Die Figur zeigt in vereinfachter Darstellung ein hydraulisch vorgesteuertes Druckventil 10, das aus einem in Einbautechnik bzw. Patronentechnik ausgebildeten Hauptventil 11 und einem dieses vorsteuernden Proportional-Druckventil 12 besteht.

Das Hauptventil 11 hat ein Gehäuse 13, das aus einer patronenförmigen Hülse 14 und einem letztere stirnseitig abschließenden Deckel 15 besteht. In der Hülse 14 ist ein axial herangeführter erster Anschluß 16 ausgebildet, der mit einer Druckmittelquelle 17 in Verbindung steht. Ferner ist in der Hülse 14 ein radial herangeführter, zweiter Anschluß 18 ausgebildet, der zu einem Tank 19 entlastet ist. Im Inneren der Hülse 14 ist zwischen die beiden Anschlüsse 16, 18 ein kegeliger Ventilsitz 21 geschaltet. Die patronenförmige Hülse 14 weist in ihrem Inneren eine bis an den Ventilsitz 21 herangeführte Längsbohrung 22 auf, in der ein Hauptventilkolben 23 dicht und gleitend geführt ist.

Der Hauptventilkolben 23 ist hier als Stufenkolben 24 ausgeführt, dessen Kolbenabschnitt 25 mit großem Durchmesser unmittelbar in einen kleineren Kolbenabschnitt 26 übergeht. Der große Kolbenabschnitt 25, der unmittelbar in der Längsbohrung 22 dicht und gleitend geführt ist, weist an seiner dem ersten Anschluß 16 zugewandten Stirnseite eine große wirksame Druckfläche 27 auf. Mit dieser großen Druckfläche 27 sitzt der große Kolbenabschnitt 25 im kegeligen Ventilsitz 21 auf, so daß das Hauptventil 11 in Sitzventilbauweise ausgeführt ist. Mit seinem kleinen Kolbenabschnitt 26 ist der Stufenkolben 24 dicht und gleitend in einer Innenhülse 28 geführt, die konzentrisch in die patronenförmige Hülse 14 eingesetzt ist. An seinem kleinen Kolbenabschnitt 26 bildet der Stufenkolben 24 eine kleine Druckfläche 29, welche vom Druck in einem Steuerraum 31 beaufschlagt wird. Dieser Steuerraum 31 wird von der Innenhülse 28, dem Deckel 15, sowie dem Stufenkolben 24 begrenzt. Die Innenhülse 28 weist einen außenliegenden, ringförmigen Bund 32 auf, mit dem die Innenhülse 28 zwischen Deckel 15 und patronenförmiger Hülse 14 im Gehäuse 13 gehalten ist. Dabei ist es aus Fertigungsgründen vorteilhaft, daß die Innenhülse 28 zum Toleranzausgleich sowie zur Minimierung der Leckage bei geschlossenem Ventilsitz von der Steuerölseite her mit einem elastischen Dichtelement 33 gegen die Hülse 14 abgedichtet ist.

Die Länge der Innenhülse 28 ist so ausgeführt, daß der Stufenkolben 24 auf der Rückseite seines großen Kolbenabschnitts 25 einen Ringraum 34 begrenzt, dem eine Differenzdruckfläche 35 am Stufenkolben 24 zugeordnet ist. Die Größe dieser Differenzdruckfläche 35 entspricht der großen Druckfläche 27 abzüglich der kleinen Druckfläche 29. Dieser allseitig geschlossene Ringraum 34 steht über eine Schrägbohrung 36 mit dem ersten Anschluß 16 in Verbindung, wobei die Schrägbohrung 36 eine austauschbare Drosselstelle 37 aufnimmt. Die Schrägbohrung 36 ist so im großen Kolbenabschnitt 25 angeordnet, daß sie zentrisch in der großen Druckfläche 27 mündet.

In dem Steuerraum 31 ist eine Feder 38 angeordnet, welche den Stufenkolben 24 in Richtung seiner Schließstellung belastet. Um eine kompakte Ausführung zu erreichen, ist der kleine Kolbenabschnitt 26 hohl ausgeführt und nimmt die Feder 38 teilweise auf.

Das zur Vorsteuerung dienende Proportional-Druckventil 12 steht über eine erste Steuerleitung 39 und eine Drossel 41 mit dem ersten Anschluß 16 in Verbindung, so daß eine Eigenversorgung mit Steueröl möglich ist. Ferner ist der Eingang des Proportional-Druckventils 12 über eine zweite Steuerleitung 42 mit einem Steuereingang 43 im Deckel 15 verbunden, so daß der Druck im Steuerraum 31 verstellbar ist.

Die Wirkungsweise des vorgesteuerten hydraulischen Druckventils 10 wird wie folgt erläutert, wobei die grundsätzliche Funktion derartiger Druckventile als an sich bekannt vorausgesetzt wird. Der im ersten Anschluß 16 herrschende Druck wirkt auf die große Druckfläche 27 des Stufenkolbens 24 in öffnender Richtung. Der Druck im ersten Anschluß 16 kann sich über die Schrägbohrung 36 und die Drosselstelle 37 auch im Ringraum 34 aufbauen und dort die Differenzdruckfläche 35 in schließender Richtung beaufschlagen. Ferner wirkt der Druck im Steuerraum 31 auf die kleine wirksame Druckfläche 29 des Stufenkolbens 24 in schließender Richtung, wobei die gleichgerichtete Kraft der Feder 38 diese Schließwirkung unterstützt. Der Druck im Steuerraum 31 wird durch das Proportional-Druckventil 12 beeinflußt; im stationären, eingeschwungenen Zustand entspricht dieser Druck im Steuerraum 31 in etwa dem Systemdruck im ersten Anschluß 16 abzüglich der auf die kleine Druckfläche 29 bezogenen Kraft der Feder 38. Über die erste Steuerleitung 39 und die Drossel 41 kann Steueröl vom ersten Anschluß 16 in den Steuerraum 31 gelangen, während aus dem Steuerraum 31 über die zweite Steuerleitung 42 Steueröl über das Proportional-Druckventil 12 zum Tank abgesteuert werden kann. Um den Stufenkolben 24 von einem oberen Anschlag aus, bei dem ein minimaler Druck im ersten Anschluß 16 gesteuert wird, in Richtung Ventilsitz 21 zu verstellen, wird somit nur noch ein Füllvolumen benötigt, das aus der kleinen Druckfläche 29 am Stufenkolben 24 sowie dessen Hub resultiert. Bei konstantem Steuerölstrom und vergleichbaren Hüben ergibt sich somit eine Reduzierung der Stellzeit im Vergleich zu bisherigen Ventilen, die dem Verhältnis der großen Druckfläche 27 zur kleinen Druckfläche 29 entspricht. Auf diese Weise lassen sich bei einem Hauptventil 11 mit einem relativ großen Durchmesser am kegeligen Ventilsitz 21 verhältnismäßig kurze Stellzeiten erreichen. Dabei kann die in der Schrägbohrung 36 angeordnete Drosselstelle 37 so ausgelegt werden, daß sie einen dämpfenden und stabilisierenden Einfluß auf die Bewegungen des Stufenkolbens 24 ausübt. Dabei ist aus Gründen einer geringen Leckage der Stufenkolben 24 mit geringem Spiel in der patronenförmigen Hülse 14 bzw. in die Innenhülse 28 eingepaßt. Da der Stufenkolben 24 einstückig ausgeführt ist, kann ein gewisser Ausgleich in der Konzentrizität der beiden Hülsen zueinander durch das Dichtelement 33 erfolgen. Im Hinblick auf strömungstechnische Gründe im Hauptventil 11 ist es dabei zweckmäßig, wenn die Mündung der Schrägbohrung 36 im Zentrum der großen Druckfläche 27 angeordnet ist.

Mit dem Druckventil 10 läßt sich eine deutliche Reduzierung der Stellzeiten erreichen, vor allem wenn ausgehend von kleinen Drücken ein Druckaufbau gesteuert werden soll. Dabei läßt sich mit Hilfe des allseitig geschlossenen Ringraums 34 eine einfache Möglichkeit zur Dämpfung des Stufenkolbens 24 erreichen, wodurch ein stabilisierendes Verhalten auf die Drucksteuerung ausgeübt wird. Ferner läßt sich das Druckventil 10 relativ einfach und kostengünstig realisieren, indem im Vergleich zu bisherigen Ventilpatronen lediglich eine zusätzliche Innenhülse sowie ein zugeordneter Stufenkolben benötigt wird.

Selbstverständlich sind an der gezeigten Ausführungsform Änderungen möglich, ohne vom Gedanken der Erfindung abzuweichen. So ist die hydraulische Ansteuerung des Hauptventils 11 mit dem Proportional-Druckventil 12 nur beispielhaft dargestellt. Die Anwendung des Druckventils 10 ist nicht auf die gezeigte Bauweise eines Druckbegrenzungsventils eingeschränkt, sondern kann z.B. auch bei einem Druckminderventil oder Druckverhältnisventil angewandt werden. Auch wenn die Bauweise bei einem Sitzventil besonders vorteilhaft ist, so ist sie dennoch auch bei einem Schieberventil anwendbar. Obwohl die gezeigte Bauweise besonders vorteilhaft ist, sind auch weitere Abwandlungen möglich, ohne vom Gedanken der Erfindung abzuweichen.

## Patentansprüche

1. Hydraulisch vorsteuerbares Druckventil mit einem als Einbauventil ausgebildeten Hauptventil (11) und einem dieses vorsteuernden Vorsteuerventil (12), wobei das Hauptventil in einem Gehäuse (13) einen von einer Feder (38) belasteten Hauptventilkolben (23) aufweist, der die Verbindung zwischen einem axial an ihn herangeführten ersten Anschluß (16) und einem radial an ihn herangeführten zweiten Anschluß (18) steuert, wobei der Hauptventilkolben vom Druck im ersten Anschluß in Öffnungsrichtung und von der Feder und von einem vom Vorsteuerventil beeinflußten Druck in einem auf der Rückseite des Hauptventilkolbens liegenden Steuerraum (31) in Schließrichtung belastet ist, **dadurch gekennzeichnet, daß** der Hauptventilkolben (23) als Stufenkolben (24) ausgebildet ist, dessen große wirksame Druckfläche (27) dem ersten Anschluß (16) zugeordnet ist, während dessen kleine wirksame Druckfläche (29) den Steuerraum (31) begrenzt und daß er eine Differenzdruckfläche (35) in einem Ringraum (34) aufweist, der vom Stufenkolben (24) im Gehäuse (13) eingeschlossen wird und der über eine Drosselstelle (37) mit dem ersten Anschluß (16) Verbindung hat.

2. Hydraulisch vorsteuerbares Druckventil nach Anspruch 1, **dadurch gekennzeichnet, daß** das Hauptventil (11) in Sitzventilbauweise ausgeführt ist, wobei das Gehäuse (13) einen zwischen beiden Anschlüssen (16, 18) liegenden, kegeligen Ventilsitz (21) aufweist, der dem Stufenkolben (24) zugeordnet ist.

3. Hydraulisch vorsteuerbares Druckventil nach Anspruch 1 oder 2, **dadurch gekennzeichnet, daß** das Gehäuse (13) eine patronenförmige Hülse (14) aufweist, in deren Längsbohrung (22) der Hauptventilkolben (23) mit seinem großen Kolbenabschnitt (25) geführt ist und in die der radial herangeführte, zweite Anschluß (18) mündet.

4. Hydraulisch vorsteuerbares Druckventil nach einem der Ansprüche 1 bis 3, **dadurch gekennzeichnet, daß** das Gehäuse (13) eine Innenhülse (28) aufnimmt, in deren koaxial zur Längsbohrung (22) verlaufenden Bohrung (30) der Hauptventilkolben (23) mit seinem kleineren Kolbenabschnitt (26) dicht und gleitend geführt ist und den Steuerraum (31) begrenzt und daß die Innenhülse (28) mit der patronenförmigen Hülse (14) und dem Hauptventilkolben (23) den Ringraum (34) begrenzen.

5. Hydraulisch vorsteuerbares Druckventil nach einem der Ansprüche 1 bis 4, **dadurch gekennzeichnet, daß** die Drosselstelle (37) im Hauptventilkolben (23) angeordnet ist.

6. Hydraulisch vorsteuerbares Druckventil nach Anspruch 5, **dadurch gekennzeichnet, daß** eine die Drosselstelle (37) aufnehmende, im Hauptventilkolben (23) verlaufende Schrägbohrung (36) mit ihrer Öffnung im Zentrum der großen wirksamen Druckfläche (27) mündet.

7. Hydraulisch vorsteuerbares Druckventil nach einem der Ansprüche 1 bis 6, **dadurch gekennzeichnet, daß** vom ersten Anschluß (16) eine erste Steuerleitung (39) über eine Drossel (41) zum Vorsteuerventil (12) geführt ist, dessen Eingang über eine zweite Steuerleitung (42) mit dem Steuerraum (31) Verbindung hat.

8. Hydraulisch vorsteuerbares Druckventil nach einem der Ansprüche 4 bis 7, **dadurch gekennzeichnet, daß** die Innenhülse (28) einen außenliegenden Bund (32) aufweist, mit dem sie zwischen der patronenförmigen Hülse (14) und einem Deckel (15) gehalten ist.

9. Hydraulisch vorsteuerbares Druckventil nach einem der Ansprüche 1 bis 8, **dadurch gekennzeichnet, daß** der Hauptventilkolben (23) einstückig ausgeführt ist und sein Kolbenabschnitt (25) mit großer Druckfläche (27) unmittelbar in den Kolbenabschnitt (26) mit kleiner Druckfläche (29) übergeht.

10. Hydraulisch vorsteuerbares Druckventil nach Anspruch 9, **dadurch gekennzeichnet, daß** der kleinere Kolbenabschnitt (26) hohl ausgebildet ist und die Feder (38) teilweise aufnimmt.

## Claims

1. A hydraulically pilotable pressure valve with a main valve (11) developed as a cartridge valve and a pilot valve (12) piloting said main valve (11), the main valve having in a housing (13) a main valve piston (23), biased by a spring (38), which controls the connection between a first port (16), leading axially up to the piston, and a second port (18), leading radially up to the piston, the main valve piston being loaded in the opening direction by pressure in the first port and in the closing direction by the spring and by a pressure influenced by the pilot valve in a control chamber (31) situated at the rear side of the main valve piston, **characterized in that** the main valve piston (23) is developed as a stepped piston (24), the large effective pressure area (27) of which is associated with the first port (16) while its smaller effective pressure area (29) delimits the control chamber (31), and that it has a differential pressure area (35) in an annular space (34) enclosed by the stepped piston (24) in the housing (13) and communicating with the first port (16) through a restrictor (37).

2. A hydraulically pilotable pressure valve according to Claim 1, **characterized in that** the main valve (11) is executed as a seated valve, the housing (13) having a conical valve seat (21) situated between the two ports (16, 18) and associated with the stepped piston (24).

3. A hydraulically pilotable pressure valve according to Claim 1 or 2, **characterized in that** the housing (13) has a cartridge-type sleeve (14) in the longitudinal bore (22) of which the main valve piston (23) with its large piston section (25) is guided and into which the radially conducted, second port (18) debouches.

4. A hydraulically pilotable pressure valve according to any of Claims 1 to 3, **characterized in that** the housing (13) accommodates an inner sleeve (28) in whose bore (30), running coaxially to the longitudinal bore (22), the main valve piston (23) with its smaller piston section (26) is guided tightly and in a sliding manner and delimits the control chamber (31), and that the inner sleeve (28) together with the cartridge-type sleeve (14) and the main valve piston (23) delimit the annular space (34).

5. A hydraulically pilotable pressure valve according to any of Claims 1 to 4, **characterized in that** the restrictor (37) is arranged in the main valve piston (23).

6. A hydraulically pilotable pressure valve according to Claim 5, **characterized in that** a slanting bore (36) running in the main valve piston (23) and accommodating the restrictor (37) debouches with its opening in the centre of the large effective pressure area (27).

7. A hydraulically pilotable pressure valve according to any of Claims 1 to 6, **characterized in that** a first control line (39) is conducted from the first port (16) via a throttle (41) to the pilot valve (12) the inlet of which communicates with the control chamber (31) via a second control line (42).

8. A hydraulically pilotable pressure valve according to any of Claims 4 to 7, **characterized in that** the inner sleeve (28) has a collar (32) on its outside by means of which it is held between the cartridge-type sleeve (14) and a cover (15).

9. A hydraulically pilotable pressure valve according to any of Claims 1 to 8, **characterized in that** the main valve piston (23) is executed in one piece and its piston section (25) with large pressure area (27) transitions directly into the piston section (26) with small pressure area (29).

10. A hydraulically pilotable pressure valve according to Claim 9, **characterized in that** the smaller piston section (26) is developed to be hollow and partly accommodates the spring (38).

## Revendications

1. Une valve de pression hydraulique pouvant être pilotée, dotée d'une valve (11) principale conçue sous forme de valve en cartouche et d'une valve (12) de pilotage pilotant celle-ci, cependant que la valve principale présente, à l'intérieur d'un corps (13), un tiroir (23) de valve principale, qui est sollicité par un ressort (38) et qui commande la connexion entre un premier raccord (16), lui étant ramené dans la direction axiale, et un second raccord (19), lui étant ramené dans la direction radiale, cependant que le tiroir de valve principale est sollicité dans le sens de son ouverture par la pression, qui règne au niveau du premier raccord, et dans le sens de sa fermeture par le ressort et par la pression, qui règne dans une chambre (31) de commande disposée à l'arrière du tiroir de valve principale et qui est influencée par la valve de pilotage, **caractérisée en ce que** le tiroir (23) de valve principale est conçu sous forme de tiroir (24) étagé, dont la grande surface (27) de pression active est dédiée au premier raccord (16), cependant que sa petite surface (29) de pression active limite la chambre (31) de commande, et qu'il présente une surface (35) de différence de pression à l'intérieur d'une chambre (34) annulaire, qui est enfermée dans le corps (13) par le tiroir (24) étagé et qui est reliée au premier raccord (16) par une portion (37) d'étranglement.

2. Une valve de pression hydraulique pouvant être pilotée, conforme à la revendication n° 1, **caractérisée en ce que** la valve (11) principale est conçue sous forme de valve à siège de clapet, cependant que le corps (13) présente un siège (21) de valve conique, qui est disposé entre les deux raccords (16, 18) et qui est dédié au tiroir (24) étagé.

3. Une valve de pression hydraulique pouvant être pilotée, conforme à la revendication n° 1 ou n° 2, **caractérisée en ce que** le corps (13) présente une douille (14) en forme de cartouche, dont l'alésage (22) longitudinal guide le tiroir (23) de valve principale, de par la grande section (25) de tiroir de celui-ci, et où débouche le second raccord (18), ramené dans la direction radiale.

4. Une valve de pression hydraulique pouvant être pilotée, conforme à une des revendications n° 1 à n° 3, **caractérisée en ce que** le corps (13) reçoit une douille (28) interne, qui guide le tiroir (23) de valve principale, de par sa section (26) de tiroir plus petite, de façon étanche et glissante dans l'alésage (30), lequel est disposé de façon coaxiale par rapport à l'alésage (22) longitudinal, et qui constitue une limite de la chambre (31) de commande, et que la douille (28) interne avec la douille (14) en forme de cartouche et le tiroir (23) de valve principale, ensemble, délimitent la chambre (34) annulaire.

5. Une valve de pression hydraulique pouvant être pilotée, conforme à une des revendications n° 1 à n° 4, **caractérisée en ce que** la portion (37) d'étranglement est disposée à l'intérieur du tiroir (23) de valve principale.

6. Une valve de pression hydraulique pouvant être pilotée, conforme à la revendication n° 5, **caractérisée en ce que** un alésage (36) en biais, qui est disposé dans le tiroir (23) de valve principale et qui héberge la portion (37) d'étranglement, de par son orifice débouche au centre de la grande surface (27) de pression active.

7. Une valve de pression hydraulique pouvant être pilotée, conforme à une des revendications n° 1 à n° 6, **caractérisée en ce que** une première conduite (39) de commande mène du premier raccord (16), au travers d'un orifice (41) d'étranglement, jusqu'à la valve (12) de pilotage, dont l'entrée est reliée à la chambre (31) de commande par une seconde conduite (43) de commande.

8. Une valve de pression hydraulique pouvant être pilotée, conforme à une des revendications n° 4 à n° 7, **caractérisée en ce que** la douille (28) interne présente un épaulement (32) extérieur, à l'aide duquel elle est maintenue entre la douille (14) en forme de cartouche et un couvercle (15).

9. Une valve de pression hydraulique pouvant être pilotée, conforme à une des revendications n° 1 à n° 8, **caractérisée en ce que** le tiroir (23) de valve principale est réalisé d'une pièce et passe immédiatement de sa section (25) de tiroir, présentant une grande surface (27) de pression, à la section (26) de tiroir, présentant une petite surface (29) de pression.

10. Une valve de pression hydraulique pouvant être pilotée, conforme à la revendication n° 9, **caractérisée en ce que** la section (26) de tiroir plus petite est conçue creuse et reçoit le ressort (38), partiellement.
